# EUROPEAN PATENT SPECIFICATION

(11) **EP 3 408 520 B1**
(45) Date of publication and mention of the grant of the patent: **12.05.2021**
(21) Application number: 16702906.5
(22) Date of filing: 28.01.2016
(51) Int. Cl.: F02D 41/02

(54) **CONTROL SYSTEM HAND-HELD POWER TOOL USE OF A CONTROL SYSTEM AND METHOD OF CONTROLLING**
STEUERUNGSSYSTEM, HANDGEHALTENES ELEKTROWERKZEUG, VERWENDUNG EINES STEUERUNGSVERFAHRENS UND VERFAHREN ZUR STEUERUNG
SYSTÈME DE COMMANDE, MACHINE-OUTIL À MAIN, UTILISATION D'UN SYSTÈME DE COMMANDE ET PROCÉDÉ DE COMMANDE

(43) Date of publication of application: 05.12.2018
(73) Proprietor: Husqvarna AB, 561 82 Huskvarna (SE)
(72) Inventor: LARSSON, Mikael, 556 28 Jönköping (SE); EKLUND, Henrik, 560 30 Tenhult (SE); LUNDBLAD, Björn, 556 28 Jönköping (SE); ASSARGÅRD, Johan, 554 65 Jönköping (SE)
(86) International application number: PCT/EP2016/051832
(87) International publication number: WO 2017/129246

(56) References cited:
- US-A1- 2009 193 669
- US-A1- 2010 147 544
- US-A1- 2014 028 332
- Anonymous: "arduino uno - Two sensors on one input - Arduino Stack Exchange", , 24 August 2015 (2015-08-24), XP055310815, Retrieved from the Internet: URL:http://arduino.stackexchange.com/quest ions/14489/two-sensors-on-one-input [retrieved on 2016-10-14]
- Mike Barela: "Sensing Switches on an Analog Input, Including Multiple Key Presses", , 3 November 2013 (2013-11-03), XP055310881, Retrieved from the Internet: URL:http://21stdigitalhome.blogspot.nl/201 3/11/sensing-switches-on-analog-input.html [retrieved on 2016-10-14]

## Description

### TECHNICAL FIELD

The present invention relates to a control system for controlling an internal combustion engine of a hand-held power tool. The present invention further relates to a hand-held power tool comprising an internal combustion engine, to the use of a control system in a hand-held power tool, and to a method of controlling a hand-held power tool comprising an internal combustion engine.

### BACKGROUND

Hand-held power tools such as chain saws, cutting tools and grass trimmers that have internal combustion engines are known. Each of these types of machines has a working tool, such as a chain, one or more a cutting blades, or one or more cutting strings, which is brought to an operating motion by the combustion engine. Since the working tool is often close-by the operator, there is a risk of contact and an accidental injury occurring. Therefore, such machines are often equipped with various security arrangements for the protection of the operator.

The hand-held power tool may be equipped with a centrifugal clutch that engages the working tool when the engine exceeds a certain rotational speed. In normal operation, the centrifugal clutch improves safety because the working tool does not rotate, or oscillate, when the engine speed is below a clutch-in speed of the centrifugal clutch.

The hand-held power tool is normally started with the throttle valve of a carburettor of the combustion engine positioned in a starting position in order to ensure an efficient start-up of the internal combustion engine. In the starting position, more air flows through the throttle valve than in an idle position of the throttle valve. In such a throttle position the rotational speed of the combustion engine may increase above the clutch-in speed when the engine starts. Thus, arrangements for avoiding reaching the clutch-in speed and unintentional rotation, or oscillation, of the working tool at start-up of the internal combustion engine, i.e. arrangements for implementing a so-called start safety function, are provided in hand-held power tools. In such arrangements the rotational speed of the combustion engine is prevented from reaching the clutch-in speed by the provision of a rotational speed limitation. The rotational speed limitation has to be deactivated in order to rev up the combustion engine above the clutch-in speed.

US 7699039 discloses a method for controlling an ignition system of an internal combustion engine. A microcomputer operates a switch to control an ignition timing. The microcomputer is in communication with a speed sensor that detects the rotational speed of the engine and a speed limitation control that limits the engine speed to a limitation speed below the clutch-in speed of an included centrifugal clutch. The speed limitation control is active or activated when starting the engine. The speed limitation control is automatically deactivated when a low speed state of the engine is detected.

US 4553517 discloses a microcomputer used for control of the ignition functions of an ignition system of an internal combustion engine a chainsaw. A switch in an operating handle or the like is connected via a transistor to a digital input of the microcomputer. The microcomputer reads the status of the switch once every revolution of the engine and as long as the switch is closed the ignition is delayed at a rotational speed above a predetermined, programmed value, e.g. 3000 rpm. Thus, the rotational speed of the engine is restricted. When the internal combustion engine is to be operated without restriction, the switch is opened and the ignition is normal. The restriction is used at start in order to avoid speeding of the internal combustion engine during the start procedure. A parallel switch is operated by a brake device of the engine, such as a kick-back brake device of the chain saw. During braking the parallel switch is closed and the rotational speed of the engine is thereby restricted to the same value as the rotational speed during the start procedure US 2014/028332 A1 discloses a control circuit for controlling an internal combustion engine of a hand-held power tool based on the position of various sensors.

US 2010/147544 A1 discloses a chainsaw having an internal combustion engine, an ignition controller configured to operate in a non-firing control mode limiting the speed of the chain during a start-up phase, and a plurality of different sensors aimed at different ways of deactivating a speed limiter, in particular a throttle sensor.

### SUMMARY

It is an object of the present invention to provide a control system for an internal combustion engine of a hand-held power tool, in which two sensors related to a control of the internal combustion engine are distinguishable.

According to an aspect of the invention, the object is achieved by a control system for controlling an internal combustion engine of a hand-held power tool, the hand-held power tool comprising a working tool, and a centrifugal clutch. The centrifugal clutch connects the internal combustion engine with the working tool. The internal combustion engine has a clutch-in speed above which the centrifugal clutch engages and the internal combustion engine drives the working tool. The control system comprises an electronic control logic, a first sensor, and a second sensor. A first conductive path comprises the first sensor and a second conductive path comprises the second sensor. The first conductive path and the second conductive path are connected to an input of the electronic control logic. The first conductive path and the second conductive path are connected to a fixed voltage potential of the control system. The first conductive path has a first electrical property and the second conductive path has a second electrical property. The first electrical property and the second electrical property together are different from at least one of the first electrical property and the second electrical property, such that the electronic control logic is able to detect different states of at least one of the first sensor and the second sensor at the input of the electronic control logic.

Since the first conductive path and the second conductive path are connected to an input of the electronic control logic, since the first conductive path and the second conductive path are connected to a fixed voltage potential of the control system, and since the first conductive path has a first electrical property and the second conductive path has a second electrical property, depending on a setting of at least one of the first and second sensors e.g. a different voltage potential is sensed at the input of the electronic control logic, or other electrical properties such as a current, a shape of an electrical pulse, etc. are sensed at the input of the electronic control logic. Accordingly, different states of at least one of the first sensor and the second sensor are detectable. As a result, the above mentioned object is achieved.

Moreover, in the control system according to the present invention two sensors may be connected to one input of the electronic control logic, and the electronic control logic may distinguish between the two sensors. In response to detected different states the control system may perform different measures.

The hand-held power tool may be e.g. a chain saw, a cutting tool, a hedge trimmer, a grass trimmer, etc. Accordingly, the working tool may be e.g. a saw chain, a saw blade, one or more cutting blades, a string, etc. As used herein the term hand-held power tool also encompasses power tools which may be supported by an operator in other ways than carrying the entire weight of the power tool with his or her hands, such as supporting the weight of the power tool on the shoulders or the back of the operator. The latter type of power tool is hand-held in the sense that it is guided by one or both hands of the operator.

The control system may be configured to control one or more aspects of the hand-held power tool. For instance, the control system may be configured to control one or more of a start-up of the internal combustion engine, a start safety function of the internal combustion engine, an operating parameter of the internal combustion engine, and/or respond to operator input to the hand-held power tool.

The fixed voltage potential may for instance be a ground potential of the control system. Alternatively the fixed voltage potential may be a fixed positive voltage, or a fixed negative voltage. The first and second conductive paths extend between the input of the electronic control logic and the fixed voltage potential. An electrical property may for instance be a resistance, a capacitance, or an inductance, i.e. the first conductive path may differ from the second conductive path in that they have different resistances, different capacitances, or different inductances. The electrical properties of the respective first and second conductive paths are exhibited when a relevant path is conductive, i.e. not when the relevant path is open.

According to embodiments, the first conductive path and the second conductive path may be connected in parallel to the input of the electronic control logic.

According to embodiments, the first conductive path and the second conductive path may be connected in series to the input of the electronic control logic.

According to embodiments, the first sensor may be configured to alter a first conductive property of the first conductive path, and the second sensor may be configured to alter a second conductive property of the second conductive path. In this manner manipulation of at least one of the first and second sensors may influence the first electrical property and/or the second electrical property to provide the different states detectable at the input of the electronic control logic.

According to the invention, the first sensor is associated with a stop switch of the internal combustion engine, and the second sensor is associated with a throttle valve of the internal combustion engine and is configured to sense an engine starting position of the throttle valve. In this manner the different states detectable by the electronic control logic may represent a state in which the internal combustion engine is to be stopped, and state in which the internal combustion engine is to be started up.

According to the invention, the control system comprises a speed limitation controller, the speed limitation controller being configured to limit a rotational speed of the internal combustion engine at a limitation speed, which limitation speed is below the clutch-in speed. The speed limitation controller is active or activated during a starting procedure of the internal combustion engine. The speed limitation controller is able to be deactivated when a particular state of the second sensor is detected by the electronic control logic. In this manner the deactivation of the speed limitation controller may be avoided until the particular state is detected by the electronic control logic.

The feature that the speed limitation controller is able to be deactivated encompasses; deactivation of the speed limitation controller immediately upon sensing the particular state, or deactivation of the speed limitation controller only once further criteria are fulfilled, such as rotational speed criteria of the internal combustion engine as disclosed e.g. in the above discussed US 7,699,039.

A starting procedure of the internal combustion engine is an operation performed to start the internal combustion engine in order to make the internal combustion engine run on fuel supplied to the internal combustion engine. For instance, a pull starter utilising a recoil spring, or an electric starter motor may be used during a least part of the starting procedure.

At the limitation speed the speed limitation controller initiates measures preventing the internal combustion engine from reaching the clutch-in speed. Such measures are known in the art and may comprise one or more of the following: switching off an ignition of the internal combustion engine, altering the ignition timing of the internal combustion engine, affecting a fuel injection system, if the internal combustion engine is provided with a fuel injection system. Thus, a start safety function of the hand-held power tool may be implemented. In some hand-held power tools, the internal combustion engine may be accelerated above the limitation speed under certain circumstances. Thus, the limitation speed has to be lower than the cutch-in speed to avoid unintentional engagement of the working tool.

According to a further aspect of the present invention there is provided a hand-held power tool comprising an internal combustion engine, a working tool, and a centrifugal clutch, the centrifugal clutch connecting the internal combustion engine with the working tool, wherein the internal combustion engine has a clutch-in speed above which the centrifugal clutch engages and the internal combustion engine drives the working tool. The hand-held power tool comprises a control system according to any one of aspects and/or embodiments discussed herein.

According to a further aspect of the present invention there is provided a use of a control system according to any one of aspects and/or embodiments discussed herein in a hand-held power tool comprising an internal combustion engine, a working tool, and a centrifugal clutch, the centrifugal clutch connecting the internal combustion engine with the working tool, wherein the internal combustion engine has a clutch-in speed above which the centrifugal clutch engages and the internal combustion engine drives the working tool.

According to a further aspect of the present invention there is provided a method of controlling a hand-held power tool according to claim 12.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1a illustrates a hand-held power tool according to embodiments,
Fig. 1b schematically illustrates components of the hand-held power tool,
Fig. 1c schematically illustrates a control system,
Fig. 2 schematically illustrates a portion of the hand-held power tool of Figs. 1a - 1c,
Fig. 3 illustrates the control system of Fig. 2 in more detail,
Fig. 4 illustrates an alternative control system of a hand-held power tool,
Fig. 5 illustrates an alternative control system of a hand-held power tool, and
Figs. 6a and 6b schematically illustrates a portion of a hand-held power tool according to alternative embodiments
Fig. 7a schematically illustrates a portion of a hand-held power tool 2according to embodiments,
Fig. 7b illustrates a control system of Fig. 7a in more detail,
Fig. 8 illustrates a method of controlling a hand-held power tool comprising an internal combustion engine.

### DETAILED DESCRIPTION

Aspects of the present invention will now be described more fully. Like numbers refer to like elements throughout. Well-known functions or constructions will not necessarily be described in detail for brevity and/or clarity.

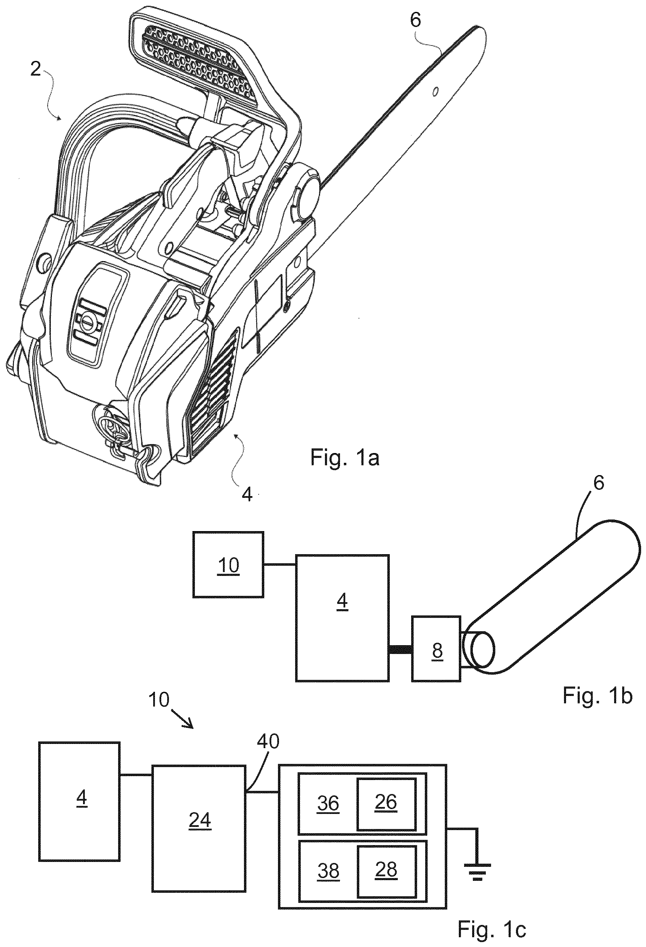

**Fig. 1a** illustrates a hand-held power tool 2 according to embodiments. In these embodiments the hand-held power tool is a chainsaw 2. **Fig. 1b** illustrates schematically components of the hand-held power tool 2. In the following reference is made to **Figs. 1a** **- 1b.** The hand-held power tool 2 comprises an internal combustion engine 4, a working tool 6 in the form of a saw chain, a centrifugal clutch 8, and a control system 10. The centrifugal clutch 8 connects the internal combustion engine 4 with the working tool 6, i.e. the working tool 6 is driven by the internal combustion engine 4 via the centrifugal clutch 8. The internal combustion engine 4 is controlled by the control system 10. The internal combustion engine 4 has a clutch-in speed above which the centrifugal clutch engages and the internal combustion engine 4 drives the working tool 6. That is, at the clutch-in speed, the internal combustion engine 4 has a rotational speed sufficient for rotating the centrifugal clutch 8 at a speed such that it engages thus, driving the working tool 6. Below the clutch-in speed the internal combustion engine 4 has a rotational speed which is too low for rotating the centrifugal clutch 8 at a speed such that it engages, i.e. below the clutch-in speed the working tool 6 is not driven by the centrifugal clutch 8.

**Fig. 1c** schematically illustrates the control system 10 of **Fig. 1b****.** The control system comprises an electronic control logic 24, which may comprise e.g. a microcontroller, a microprocessor, an FPGA, logical components, or discrete electronic components configured to control the internal combustion engine 4. The electronic control logic 24 may comprise a memory for storing program code for controlling the internal combustion engine 4. The electronic control logic 24 may comprise one or more inputs and one or more outputs. The inputs may be connected to various sensors of the control system 10 such as e.g. switches, a rotational speed sensor, a potentiometer, etc. The outputs may be connected to actuators and/or indicating arrangements of the control system 10.

The control system 10 further comprises a first sensor 26 and a second sensor 28. A first conductive path 36 comprises the first sensor 26 and a second conductive path 38 comprises the second sensor 28. The first conductive path 36 and the second conductive path 38 are connected to an input 40 of the electronic control logic 24. The first conductive path 36 has a first electrical property and the second conductive path 38 has a second electrical property. The first conductive path 36 and the second conductive path 38 are connected to a fixed voltage potential of the control system 10, such as e.g. ground.

The first electrical property and the second electrical property together are different from at least one of the first electrical property and the second electrical property, such that the electronic control logic 10 is able to detect different states of at least one of the first sensor 26 and the second sensor 36 at the input 40 of the electronic control logic 24.

The first and second conductive paths 36, 38 may form part of an electrical network. The electrical network comprises interconnected electrical components, such as e.g. resistors, inductors, capacitors, switches, diodes, etc.

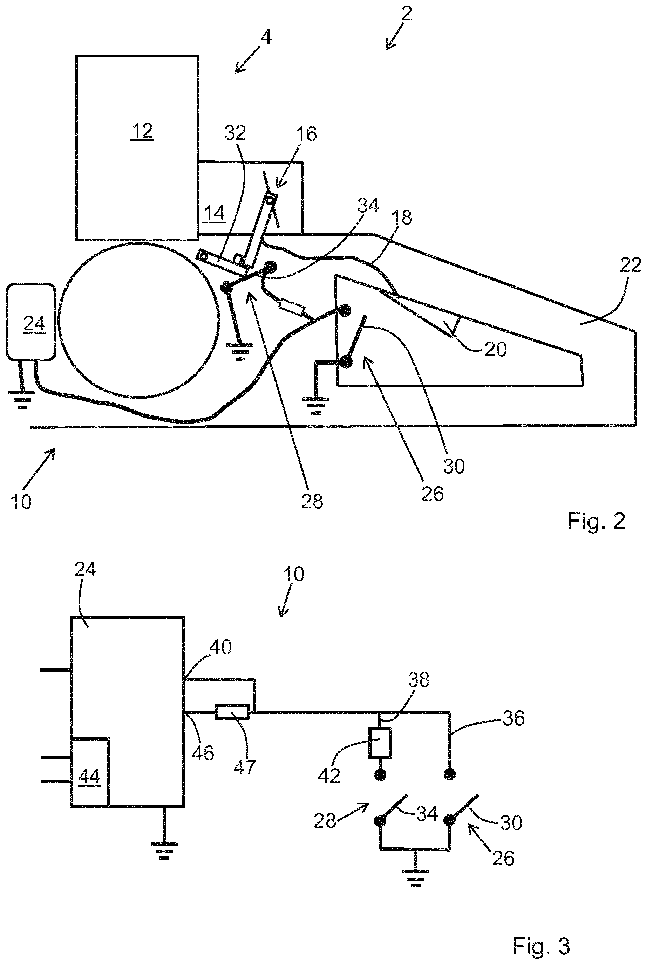

According to some embodiments, the first conductive path 36 and the second conductive path 38 are connected in parallel to the input 40 of the electronic control logic 24, see further below with reference to **Figs. 2** - **6b****.**

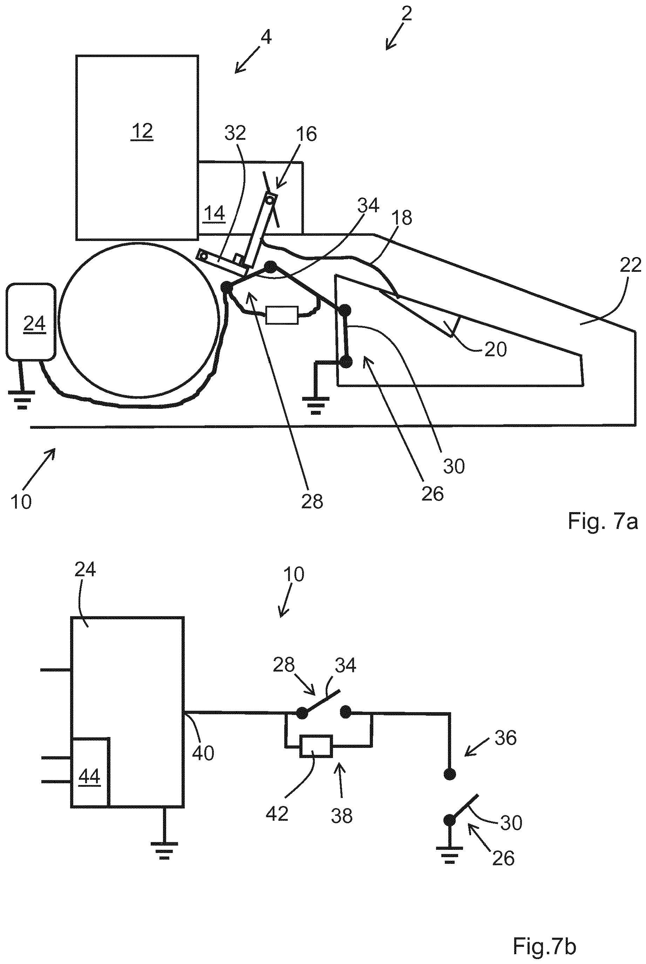

According to some embodiments, the first conductive path 36 and the second conductive path 38 are connected in series to the input 40 of the electronic control logic 24, see further below with reference to **Figs. 7a and 7b****.**

**Fig. 2** schematically illustrates a portion of a hand-held power tool 2 according to embodiments, e.g. a hand-held power tool 2 as discussed in connection with of **Figs. 1a** **- 1c.** The internal combustion engine 4 comprises a cylinder piston arrangement 12 and a carburettor 14. The carburettor 14 comprises a throttle valve 16. A linkage 18 connects the throttle valve 16 with a throttle trigger 20 at a handle 22 of the hand-held power tool 2. The linkage 18 may for instance comprise a wire or any other mechanism configured to transfer an input, provided by an operator on the throttle trigger 20, to the throttle valve 16.

The control system 10 is configured for controlling the internal combustion engine 4 of a hand-held power tool 2. Mentioned purely as an example, the control system 10 may e.g. control the ignition of the engine 4, implement a start safety function of the engine 4, stop the engine 4, etc. The control system 10 comprises an electronic control logic 24, a first sensor 26, and a second sensor 28.

In these embodiments, the first sensor 26 is associated with a stop switch 30 of the internal combustion engine 2. The stop switch 30 is arranged at the handle 22 of the hand-held power tool 2. The electronic control logic 24 may be configured such that when the stop switch 30 is closed the internal combustion engine 4 cannot be started, alternatively will stop. Thus, the stop switch 30 has to be open in order to run the internal combustion engine 4. Alternatively, the electronic control logic 24 may be configured to operate oppositely in response to the open and closed positions of the stop switch 30. The second sensor 28 is associated with the throttle valve 16 of the internal combustion engine 4 and is configured to sense an engine starting position of the throttle valve 16. The second sensor 28 comprises in these embodiments a mechanism 32 and a switch 34. The mechanism 32 is linked to the switch 34. When the throttle valve 16 is in the engine starting position, the switch 34 is in a first position and when the throttle valve 16 is not in the engine starting position, the switch 34 is in a second position.

When an operator of the hand-held power tool 2 sets the throttle valve 16 in the engine starting position the mechanism 32 ensures that the switch 34 is positioned in the first position. When an operator of the hand-held power tool 2 operates the throttle valve 16 via the throttle trigger 20, the mechanism 32 ensures that the switch 34 is positioned in the second position.

In alternative embodiments the second sensor 28 may comprise a switch arranged in connection with the throttle trigger 20.

**Fig. 3** illustrates the control system 10 of **Fig. 2** in more detail. The electronic control logic 24 is configured to control the internal combustion engine 4. An input 40 of the electronic control logic 24 is connected to sensors of the control system 10 in the form of the above-discussed switches 30, 34. A first conductive path 36 comprises the first sensor 26 and a second conductive path 38 comprises the second sensor 28. The first conductive path 36 and the second conductive path 38 are connected in parallel to an input 40 of the electronic control logic 24. The first conductive path 36 has a first electrical property and the second conductive path 38 has a second electrical property. In these embodiments, the first conductive path 36 comprises only the first sensor 26. In these embodiments, the second conductive path 38 comprises an electrical component 42 and the second sensor 28. Thus, the first electrical property and the second electrical property together are different from at least one of the first electrical property and the second electrical property.

The first conductive path 36 and the second conductive path 38 are connected to a fixed voltage potential of the control system 10. In these embodiments the fixed voltage potential is ground. Ground forms a reference voltage of the control system 10 and the electronic control logic 24. The housing of the hand-held power tool may provide the ground. As such ground may be provided at any conductive portion of the housing. Thus, the first and second conductive paths 36, 38 may be connected to the same grounding point, as illustrated in **Fig. 3****,** or to individual grounding points as illustrated in **Fig. 2****.** When the stop switch 30 of the first sensor 26 is closed, the first conductive path 36 connects the input 40 directly to ground. When the switch 34 of the second sensor 28 is closed, the second conductive path 38 connects the input 40 to ground via the electrical component 42 thus, providing a different voltage potential than ground at the input 40. If both the stop switch 30 and the switch 34 are closed, the voltage potential at the input 40 will correspond to that of ground due to the first conductive path 36 comprising only the first sensor 26. In this manner two different states may be identified, depending on the setting of the first and second sensors 26, 28. Accordingly since the first electrical property and the second electrical property together are different from at least one of the first electrical property and the second electrical property, the electronic control logic 24 is able to detect different states of at least one of the first sensor 26 and the second sensor 28 at the input 40 of the electronic control logic 24.

The control system 10 comprises a speed limitation controller 44. The electronic control logic 24 may for instance comprise the speed limitation controller 44. The speed limitation controller 44 may be at least partly implemented by means of program code in the electronic control logic 24. The speed limitation controller 24 is configured to limit a rotational speed of the internal combustion engine at a limitation speed. The limitation speed is below the clutch-in speed. The speed limitation controller 24 is active or activated during a starting procedure of the internal combustion engine. The speed limitation controller 24 is able to be deactivated when a particular state of the first sensor 26 and/or the second sensor 28 is detected by the electronic control logic 24.

In these embodiments, the electronic control logic 24 is configured to identify a start safety active mode based on a state of the second sensor 28, the speed limitation controller being active in the start safety active mode. Further, the electronic control logic 24 is configured to identify a start safety deactivation criterion, which is fulfilled by the particular state of the second sensor 28, and in response to which the electronic control logic 24 enables the speed limitation controller to be deactivated.

In these embodiments, the state detectable by the electronic control logic 24 when the second sensor 28 connects the input 40, via the electrical component 42, to ground represents the start safety mode. When the second sensor 28 interrupts the connection between the input 40 and ground corresponds to the particular state, in which the electronic control logic 24 identifies the start safety deactivation criterion. A further state is detectable by the electronic control logic 24 when the first sensor 26 connects the input 40 to ground, which further state represents a mode in which the internal combustion engine is to be stopped, or prevented from being started. Since the first sensor 26, when it is closed, is arranged to override the state of the second sensor 28, the state of the first sensor 26 is prioritised over the state of the second sensor 28.

The first sensor 26 is configured to alter a first conductive property of the first conductive path 36. In these embodiments where the first sensor 26 comprises a stop switch 30, the first conductive property may be either a conductive connection or an interrupted connection. The second sensor 28 is configured to alter a second conductive property of the second conductive path 38. In these embodiments where the second sensor 28 comprises a switch 34, the second conductive property may be either a conductive connection including the electrical component 42 or an interrupted connection. In this manner manipulation of at least one of the first and second sensors 26, 28 influences the first electrical property of the first conductive path 36 and/or the second electrical property of the second conductive path 38 to provide the different states to the electronic control logic 24.

An output 46 of the electronic control logic 24 is connected to a fixed voltage potential of the control system 10 via the first conductive path 36 and the second conductive path 38. In these embodiments the output 46 is connected to ground via the first conductive path 36 and the second conductive path 38. Thus, when a voltage/current is outputted on the output 46, the control logic 24, at the input 40 may detected different electrical signals representing different states of the first and second sensors 26, 28 depending on the settings of the first and second sensors 26, 28. More specifically, a measuring resistor 47 is connected to the output 46. Thus, at the input 40 the electronic control logic 24 may measure the voltage over the measuring resistor 47. The voltage over the measuring resistor 47 will differ depending which on the settings of the first and second sensors 26, 28. The electronic control logic 24 may utilise the measured voltage for detecting different states of at least one of the first and second sensors 26, 28, or the electronic control logic 24 may calculate the current based on Ohm's law and utilise the current for detecting different states of at least one of the first and second sensors 26, 28.

According to embodiments, the electronic control logic 24 may be configured to output a DC voltage on the output 46 of the electronic control logic 24, wherein the electrical component 42 may be a resistor. In this manner the electronic control logic 24, at the input 40 may detected different voltage potentials depending on the states of the first and second sensors 26, 28.

According to embodiments, the electronic control logic 24 may be configured to output a pulsed DC voltage or an AC voltage on the output 46 of the electronic control logic 24, and wherein the electrical component 42 is a resistor, or an inductor, or a capacitor. In this manner the electronic control logic 24, at the input 40 may detect different voltage potentials, or different voltage characteristics of the electrical signal at the input 40 depending on the type of the electrical component 42 and the settings of the first and second sensors 26, 28. If a square pulsed DC voltage is output on the output 46 and both the stop switch 30 and the switch 34 are open, a square pulsed DC voltage is sensed at the input 40. If a square pulsed DC voltage is output on the output 46 with the switch 34 closed, and the electrical component 42 is an inductor or a capacitor, a pulsed DC voltage having a rounded or sawtooth wave shape may be sensed at the input 40. A rounded or sawtooth wave shape may be identified by a rise time of the wave shape, which is considerably longer than that of a square pulsed wave shape. If the stop switch 30 is closed, the ground potential is sensed at the input 40.

In alternative embodiments, wherein an inductor or capacitor is arranged also in the first conductive path 36, the electronic control logic 24 may distinguish between the first and second sensors 26, 28 based on sensed rounded or sawtooth wave shapes with different rise times when different or both of the switches 30, 34 are closed.

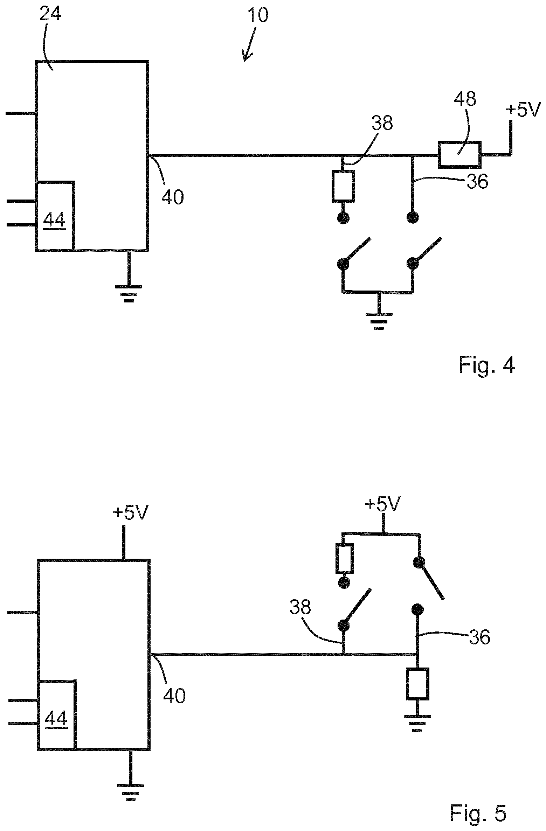

**Fig. 4** illustrates an alternative control system 10 of a hand-held power tool. These embodiments resemble in much the embodiments of **Fig. 3****.** Instead of outputting a voltage from an output of the electronic control logic 24, the input 40 of the electronic control logic 24 is connected to a reference voltage, of e.g. +5 V via a resistor 48. The first conductive path 36 and the second conductive path 38 are connected to a fixed voltage potential of the control system 10, again the fixed voltage potential is ground.

**Fig. 5** illustrates an alternative control system 10 of a hand-held power tool. These embodiments resemble in much the embodiments of **Figs. 3** **and** **4****.** Instead of the fixed voltage potential being ground, the fixed voltage potential is a fixed positive voltage of e.g. +5 V. That is, the first conductive path 36 and the second conductive path 38 connect the input 40 of the electronic control logic 24 to a fixed positive voltage potential of the control system 10.

According to alternative embodiments, a microcontroller of the electronic control logic 24 may comprise an internal resistor on the input 40 for the purpose of measuring a voltage at the input 40. Further alternative embodiments may comprise a combined input/output of a microcontroller of the electronic control logic 24, on which alternately a signal is outputted and a signal is received.

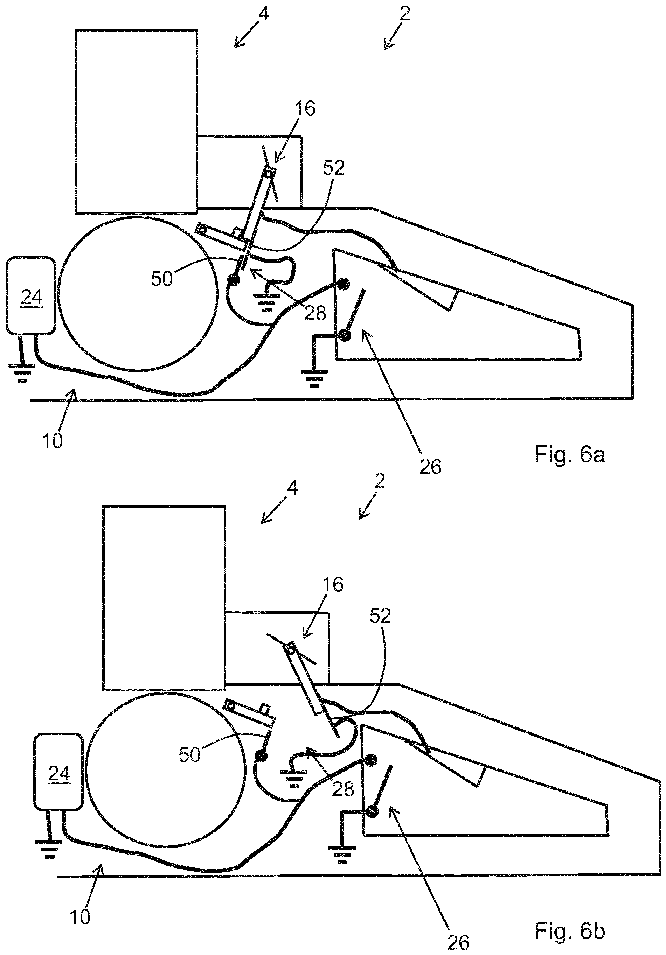

**Figs. 6a and 6b** illustrate schematically a portion of a hand-held power tool 2 according to alternative embodiments. These embodiments resemble in much the embodiments the previous embodiments. Again, the control system 10 is configured for controlling the internal combustion engine 4 of a hand-held power tool 2. The control system 10 comprises an electronic control logic 24, a first sensor 26, and a second sensor 28.

Again, the first sensor 26 is associated with a stop switch 30 of the internal combustion engine 2 and the second sensor 28 is associated with the throttle valve 16 of the internal combustion engine 4 and is configured to sense an engine starting position of the throttle valve 16. The second sensor 28 comprises in these embodiments a variable capacitance. The second sensor 28 comprises a first plate 50 and a second plate 52. The first plate 50 is fixedly arranged in relation to the throttle valve 16. The second plate 52 is movable by the throttle valve 16. When the throttle valve 16 is in the engine starting position, the first and second plates 50, 52 are arranged in a first position in relation to each other. When the throttle valve 16 is moved from the engine starting position, the second plates 52 is displaced in relation to the first plate 50. Thus, when an operator of the hand-held power tool 2 sets the throttle valve 16 in the engine starting position the second sensor 28 has a first capacitance. When an operator of the hand-held power tool 2 operates the throttle valve 16 via the throttle trigger 20, the capacitance of the second sensor 28 increases as the throttle valve 16 is opened.

When the electronic control logic 24 outputs a pulsed DC voltage or an AC voltage, and as long as the stop switch 30 of the first sensor 26 is open, the electronic control logic 24 may distinguish between the capacitance of the second sensor 28 with the first and second plates 50, 52 in their first position and the increased capacitance of the second sensor 28 corresponding to the second plate 52 together with the throttle valve 16 having been moved from the engine starting position.

In alternative embodiments, other types of sensors are envisaged to be used in the control system 10 as first and second sensors 26, 28 for altering of the electrical properties of the first and second conductive paths 36, 38. Besides a mechanical switch and a variable capacitance sensor already discussed mentioned purely as an example, such a sensor may be an electrical switch, a magnet with a hall effect sensor, a potentiometer, etc.

**Fig. 7a** schematically illustrates a portion of a hand-held power tool 2 according to embodiments, e.g. a hand-held power tool 2 as discussed in connection with of **Figs. 1a** **- 1c.** These embodiments resemble in much the previously discussed embodiments. Again, the carburettor 14 comprises a throttle valve 16. A linkage 18 connects the throttle valve 16 with a throttle trigger 20 at a handle 22 of the hand-held power tool 2. Again, the control system 10 is configured for controlling the internal combustion engine 4 of the hand-held power tool 2. The control system 10 comprises an electronic control logic 24, a first sensor 26, and a second sensor 28. Again, the first sensor 26 is associated with a stop switch 30 of the internal combustion engine 2 and the second sensor 28 is associated with the throttle valve 16 of the internal combustion engine 4 and is configured to sense an engine starting position of the throttle valve 16. The second sensor 28 comprises in these embodiments a mechanism 32 and a switch 34. The mechanism 32 is linked to the switch 34. When the throttle valve 16 is in the engine starting position, the switch 34 is in a first position and when the throttle valve 16 is not in the engine starting position, the switch 34 is in a second position.

Again, when an operator of the hand-held power tool 2 sets the throttle valve 16 in the engine starting position the mechanism 32 ensures that the switch 34 is positioned in the first position. When an operator of the hand-held power tool 2 operates the throttle valve 16 via the throttle trigger 20, the mechanism 32 ensures that the switch 34 is positioned in the second position.

**Fig. 7b** illustrates the control system 10 of **Fig. 7a** in more detail. The electronic control logic 24 is configured to control the internal combustion engine 4. An input 40 of the electronic control logic 24 is connected to sensors of the control system 10 in the form of the above-discussed switches 30, 34. A first conductive path 36 comprises the first sensor 26 and a second conductive path 38 comprises the second sensor 28. The main difference to the embodiments of **Figs. 2** - **6b** is that the first conductive path 36 and the second conductive path 38 are connected in series to the input 40 of the electronic control logic 24. The first conductive path 36 has a first electrical property and the second conductive path 38 has a second electrical property. The first conductive path 36 comprises only the first sensor 26 and the second conductive path 38 comprises an electrical component 42 and the second sensor 28. In the second conductive path 38 the electrical component 42 and the second sensor 28 are connected in parallel, such that when the second switch 34 is open the second conductive path 38 has different electrical properties than when the second switch 34 is closed. Moreover, the first electrical property and the second electrical property together are different from at least one of the first electrical property and the second electrical property.

The first conductive path 36 and the second conductive path 38 are connected to a fixed voltage potential of the control system 10. In these embodiments the fixed voltage potential is ground. Ground forms a reference voltage of the control system 10 and the electronic control logic 24. When the stop switch 30 of the first sensor 26 is closed, the first conductive path 36 connects the input 40 to ground, either via only the electrical component 42 or via the switch 34 in parallel with the electrical component 42. When the switch 34 of the second sensor 28 is closed, the second conductive path 38 connects the input 40 to ground via the stop switch 30, if the latter is closed. Thus, if both the stop switch 30 and the switch 34 are closed, the voltage potential at the input 40 will correspond to that of ground. If the stop switch 30 is open the connection of the input 40 to ground is interrupted. In this manner two different states may be identified, depending on the setting of the first and second sensors 26, 28. Accordingly since the first electrical property and the second electrical property together are different from at least one of the first electrical property and the second electrical property, the electronic control logic 24 is able to detect different states of at least one of the first sensor 26 and the second sensor 28 at the input 40 of the electronic control logic 24. If the stop switch 30 is closed and the switch 34 is open, a further state is detectable at the input of the electronic control logic 24.

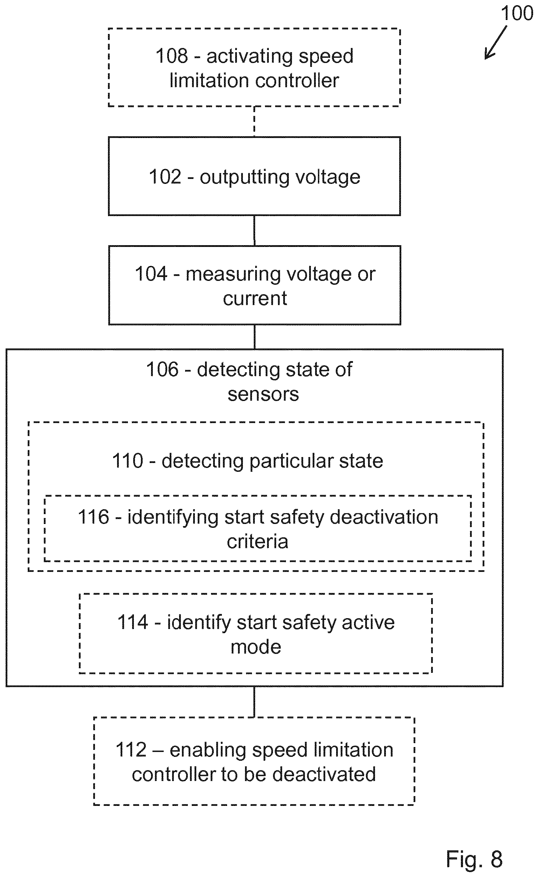

**Fig. 8** illustrates a method 100 of controlling a hand-held power tool comprising an internal combustion engine as discussed above in connection with the embodiments of **Figs. 1a** - **7b****.** The method comprises steps of:
- outputting 102 a DC voltage, a pulsed DC voltage, or an AC voltage on the output of the electronic control logic,
- measuring 104 a voltage or current of the input of the electronic control logic, and
- detecting 106 a state of the first sensor and/or the second sensor based on the measured voltage or current.

Suitably the method 100 is performed in a control system 10 of a hand-held power tool according to any aspect and or embodiments discussed herein. The method 100 may for instance be implemented by program code in the electronic control logic 24.

According to the invention, the control system comprises a speed limitation controller as discussed above, the method 100 comprises a step of:
- activating 108 the speed limitation controller prior to or during a starting procedure of the internal combustion engine, wherein the step of detecting 106 a state comprises:
- detecting 110 a particular state of the second sensor, and wherein the method 100 further comprises a step of:
- enabling 112 the speed limitation controller to be deactivated when the particular state has been determined.

The feature that the speed limitation controller is enabled to be deactivated encompasses; deactivation of the speed limitation controller immediately upon detecting the particular state, or deactivation of the speed limitation controller only once one or more further criteria are fulfilled.

According to embodiments, the speed limitation controller may be active in a start safety active mode, and the speed limitation controller may be able to be deactivated when a start safety deactivation criterion is fulfilled, the method 100 may comprise steps of:
- identifying 114 the start safety active mode based on a state of the second sensor, and
- identifying 116 the start safety deactivation criterion based on the particular state of the second sensor.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the present invention, as defined by the appended claims. According to some embodiments the first conductive path 36 may also comprises an electrical component, different than the electrical component 42 of the second conductive path 38. Thus, three different states may be provided at the input 40 of the electronic control logic 24 depending on the settings of the first and second sensors 26, 28. According to further embodiments, more than two sensors may be connected to the input 40 of the electronic control logic 24, each sensor being connected via parallel conductive paths to the input 40, and each conductive path having different electrical properties, such that the electronic control logic 24 is able to detect different states of the different sensors at the input 40 of the electronic control logic 24.

## Claims

1. A control system (4) for controlling an internal combustion engine (4) of a hand-held power tool (2), the hand-held power tool (2) comprising a working tool (6), and a centrifugal clutch (8), the centrifugal clutch (8) connecting the internal combustion engine (4) with the working tool (6), wherein the internal combustion engine (4) has a clutch-in speed above which the centrifugal clutch (8) engages and the internal combustion engine (4) drives the working tool (6), wherein the control system (10) comprises an electronic control logic (24), a first sensor (26) associated with a stop switch (30) of the internal combustion engine (4), and a second sensor (28) associated with a throttle valve (16) of the internal combustion engine (4) and configured to sense an engine starting position of the throttle valve (16), wherein a first conductive path (36) comprises the first sensor (26) and a second conductive path (38) comprises the second sensor (28), and wherein the first conductive path (36) and the second conductive path (38) are connected to an input (40) of the electronic control logic (24), wherein the control system (10) comprises a speed limitation controller (44) configured to limit a rotational speed of the internal combustion engine (4) at a limitation speed, which limitation speed is below the clutch-in speed, wherein the speed limitation controller (44) is active or activated during a starting procedure of the internal combustion engine (4), and wherein the speed limitation controller (44) is able to be deactivated when a particular state of the second sensor (28) is detected by the electronic control logic (24),
**characterized in that** the first conductive path (36) and the second conductive path (38) are connected to a fixed voltage potential of the control system (10), wherein
the first conductive path (36) has a first electrical property and the second conductive path (38) has a second electrical property, and wherein
the first electrical property and the second electrical property together are different from at least one of the first electrical property and the second electrical property,
such that the electronic control logic (24) is able to detect different states of at least one of the first sensor (26) and the second sensor (28) at the input (40) of the electronic control logic (24).

2. The control system (10) according to claim 1, wherein the first conductive path (36) and the second conductive path (38) are connected in parallel or in series to the input (40) of the electronic control logic (24).

3. The control system (10) according to any one of the preceding claims, wherein the first sensor (26) is configured to alter a first conductive property of the first conductive path (36), and wherein the second sensor (28) is configured to alter a second conductive property of the second conductive path (38).

4. The control system (10) according to any one of the preceding claims, wherein the first conductive path (36) comprises only the first sensor (26).

5. The control system (10) according to any one of the preceding claims, wherein the second conductive path (38) comprises an electrical component (42) and the second sensor (28).

6. The control system (10) according to any one of the preceding claims, wherein the first conductive path (36) and the second conductive path (38) are connected to a fixed voltage potential of the control system (10) via an output (46) of the electronic control logic (24).

7. The control system (10) according to claim 5 and 6, wherein the electronic control logic (24) is configured to output a DC voltage on the output (46) of the electronic control logic (24), and wherein the electrical component (42) is a resistor.

8. The control system (10) according to claim 5 and 6, wherein the electronic control logic (24) is configured to output a pulsed DC voltage or an AC voltage on the output (46) of the electronic control logic (24), and wherein the electrical component (42) is a resistor, or an inductor, or a capacitor.

9. The control system (10) according to any of the preceding claims, wherein the electronic control logic (24) is configured to identify a start safety active mode based on a state of the second sensor (28), the speed limitation controller (44) being active in the start safety active mode, and to identify a start safety deactivation criterion, which is fulfilled by the particular state of the second sensor (28), and in response to which the electronic control logic (24) enables the speed limitation controller (44) to be deactivated.

10. A hand-held power tool (2) comprising an internal combustion engine (4), a working tool (6), and a centrifugal clutch (8), the centrifugal clutch (8) connecting the internal combustion engine (4) with the working tool (6), wherein the internal combustion engine (4) has a clutch-in speed above which the centrifugal clutch (8) engages and the internal combustion engine (4) drives the working tool (6),
**characterised in that** the hand-held power tool (2) comprises a control system (10) according to any one of the preceding claims.

11. Use of a control system (10) according to any one of claims 1 - 9 in a hand-held power tool (2) comprising an internal combustion engine (4), a working tool (6), and a centrifugal clutch (8), the centrifugal clutch (8) connecting the internal combustion engine (4) with the working tool (6), wherein the internal combustion engine (4) has a clutch-in speed above which the centrifugal clutch (8) engages and the internal combustion engine (4) drives the working tool (6).

12. A method (100) of controlling a hand-held power tool (2) comprising an internal combustion engine (4), a working tool (6), and a centrifugal clutch (8), the centrifugal clutch (8) connecting the internal combustion engine (4) with the working tool (6), wherein the internal combustion engine (4) has a clutch-in speed above which the centrifugal clutch (8) engages and the internal combustion engine (4) drives the working tool (6), wherein the hand-held power tool (2) further comprises a control system (10) comprising an electronic control logic (24), a first sensor (26) associated with a stop switch (30) of the internal combustion engine (4), and a second sensor (28) associated with a throttle valve (16) of the internal combustion engine (4) and configured to sense an engine starting position of the throttle valve (16), wherein a first conductive path (36) comprises the first sensor (26) and a second conductive path (38) comprises the second sensor (28), wherein the first conductive path (36) and the second conductive path (38) are connected to an input (40) of the electronic control logic (24), wherein the first conductive path (36) and the second conductive path (38) are connected to a fixed voltage potential of the control system (10), wherein the first conductive path (36) has a first electrical property and the second conductive path (38) has a second electrical property, the first electrical property and the second electrical property together are different from at least one of the first electrical property and the second electrical property, wherein the control system (10) comprises a speed limitation controller (44) configured to limit a rotational speed of the internal combustion engine (4) at a limitation speed, which limitation speed is below the clutch-in speed, and wherein the method (100) comprises steps of:
- activating (108) the speed limitation controller (44) prior to or during a starting procedure of the internal combustion engine (4)
- outputting (102) a DC voltage, a pulsed DC voltage, or an AC voltage on the output of the electronic control logic (24),
- measuring (104) a voltage or current at the input (40) of the electronic control logic (24),
- detecting (106) a particular state of the second sensor (28) based on the measured voltage or current, and
- enabling (112) the speed limitation controller (44) to be deactivated when the particular state has been determined.

13. The method (100) according to claim 12, wherein the speed limitation controller (44) is active in a start safety active mode, and wherein the speed limitation controller (44) is able to be deactivated when a start safety deactivation criterion is fulfilled, wherein the method (100) comprises steps of:
- identifying (114) the start safety active mode based on a state of the second sensor (28), and
- identifying (116) the start safety deactivation criterion based on the particular state of the second sensor (28).

## Patentansprüche

1. Steuersystem (4) zur Steuerung eines Verbrennungsmotors (4) eines handgehaltenen Elektrowerkzeugs (2), wobei das handgehaltene Elektrowerkzeug (2) ein Arbeitswerkzeug (6) und eine Fliehkraftkupplung (8) umfasst, die Fliehkraftkupplung (8) den Verbrennungsmotor (4) mit dem Arbeitswerkzeug (6) verbindet, wobei der Verbrennungsmotor (4) eine Einkuppeldrehzahl aufweist, oberhalb der die Fliehkraftkupplung (8) einkuppelt und der Verbrennungsmotor (4) das Arbeitswerkzeug (6) antreibt, wobei das Steuersystem (10) eine elektronische Steuerlogik (24), einen ersten Sensor (26), der mit einem Stoppschalter (30) des Verbrennungsmotors (4) verbunden ist, und einen zweiten Sensor (28) umfasst, der mit einer Drosselklappe (16) des Verbrennungsmotors (4) verbunden und konfiguriert ist, eine Motorstartposition der Drosselklappe (16) zu erfassen, wobei eine erste Leiterbahn (36) den ersten Sensor (26) umfasst und eine zweite Leiterbahn (38) den zweiten Sensor (28) umfasst, und wobei die erste Leiterbahn (36) und die zweite Leiterbahn (38) mit einem Eingang (40) der elektronischen Steuerlogik (24) verbunden sind, wobei das Steuersystem (10) eine Drehzahlbegrenzungssteuerung (44) umfasst, die konfiguriert ist, eine Drehzahl des Verbrennungsmotors (4) auf eine Begrenzungsdrehzahl zu begrenzen, wobei die Begrenzungsdrehzahl unterhalb der Einkuppeldrehzahl liegt, wobei die Drehzahlbegrenzungssteuerung (44) während eines Startvorgangs des Verbrennungsmotors (4) aktiv oder aktiviert ist, und wobei die Drehzahlbegrenzungssteuerung (44) deaktiviert werden kann, wenn ein bestimmter Zustand des zweiten Sensors (28) von der elektronischen Steuerlogik (24) detektiert wird,
**dadurch gekennzeichnet, dass** die erste Leiterbahn (36) und die zweite Leiterbahn (38) mit einem festen Spannungspotenzial des Steuersystems (10) verbunden sind, wobei
die erste Leiterbahn (36) eine erste elektrische Eigenschaft aufweist und die zweite Leiterbahn (38) eine zweite elektrische Eigenschaft aufweist, und wobei sich die erste elektrische Eigenschaft und die zweite elektrische Eigenschaft zusammen von mindestens einer von der ersten elektrischen Eigenschaft und der zweiten elektrischen Eigenschaft unterscheiden,
sodass die elektronische Steuerlogik (24) in der Lage ist, unterschiedliche Zustände von mindestens einem von dem ersten Sensor (26) und dem zweiten Sensor (28) am Eingang (40) der elektronischen Steuerlogik (24) zu detektieren.

2. Steuersystem (10) nach Anspruch 1, wobei die erste Leiterbahn (36) und die zweite Leiterbahn (38) parallel oder in Reihe mit dem Eingang (40) der elektronischen Steuerlogik (24) verbunden sind.

3. Steuersystem (10) nach einem der vorstehenden Ansprüche, wobei der erste Sensor (26) konfiguriert ist, eine erste leitende Eigenschaft der ersten Leiterbahn (36) zu ändern, und wobei der zweite Sensor (28) konfiguriert ist, eine zweite leitende Eigenschaft der zweiten Leiterbahn (38) zu ändern.

4. Steuersystem (10) nach einem der vorstehenden Ansprüche, wobei die erste Leiterbahn (36) nur den ersten Sensor (26) umfasst.

5. Steuersystem (10) nach einem der vorstehenden Ansprüche, wobei die zweite Leiterbahn (38) eine elektrische Komponente (42) und den zweiten Sensor (28) umfasst.

6. Steuersystem (10) nach einem der vorstehenden Ansprüche, wobei die erste Leiterbahn (36) und die zweite Leiterbahn (38) über einen Ausgang (46) der elektronischen Steuerlogik (24) mit einem festen Spannungspotenzial des Steuersystems (10) verbunden sind.

7. Steuersystem (10) nach Anspruch 5 und 6, wobei die elektronische Steuerlogik (24) konfiguriert ist, eine Gleichspannung an dem Ausgang (46) der elektronischen Steuerlogik (24) auszugeben, und wobei die elektrische Komponente (42) ein Widerstand ist.

8. Steuersystem (10) nach Anspruch 5 und 6, wobei die elektronische Steuerlogik (24) konfiguriert ist, eine gepulste Gleichspannung oder eine Wechselspannung am Ausgang (46) der elektronischen Steuerlogik (24) auszugeben, und wobei die elektrische Komponente (42) ein Widerstand oder ein Induktor oder ein Kondensator ist.

9. Steuersystem (10) nach einem der vorstehenden Ansprüche, wobei die elektronische Steuerlogik (24) konfiguriert ist, einen Startsicherheitsaktivmodus basierend auf einem Zustand des zweiten Sensors (28) zu identifizieren, wobei die Drehzahlbegrenzungssteuerung (44) in dem Startsicherheitsaktivmodus aktiv ist, und ein Startsicherheitsdeaktivierungskriterium zu identifizieren, das durch den bestimmten Zustand des zweiten Sensors (28) erfüllt wird, worauf als Reaktion die elektronische Steuerlogik (24) die Deaktivierung der Drehzahlbegrenzungssteuerung (44) freigibt.

10. Handgehaltenes Elektrowerkzeug (2) umfassend einen Verbrennungsmotor (4), ein Arbeitswerkzeug (6) und eine Fliehkraftkupplung (8), wobei die Fliehkraftkupplung (8) den Verbrennungsmotor (4) mit dem Arbeitswerkzeug (6) verbindet, wobei der Verbrennungsmotor (4) eine Einkuppeldrehzahl aufweist, oberhalb der die Fliehkraftkupplung (8) einkuppelt und der Verbrennungsmotor (4) das Arbeitswerkzeug (6) antreibt, **dadurch gekennzeichnet, dass** das handgehaltene Elektrowerkzeug (2) eine Steuerung (10) nach einem der vorstehenden Ansprüche umfasst.

11. Verwendung eines Steuersystems (10) nach einem der Ansprüche 1 bis 9 in einem handgehaltenen Elektrowerkzeug (2), das einen Verbrennungsmotor (4), ein Arbeitswerkzeug (6) und eine Fliehkraftkupplung (8) umfasst, wobei die Fliehkraftkupplung (8) den Verbrennungsmotor (4) mit dem Arbeitswerkzeug (6) verbindet, wobei der Verbrennungsmotor (4) eine Einkuppeldrehzahl aufweist, oberhalb der die Fliehkraftkupplung (8) einkuppelt und der Verbrennungsmotor (4) das Arbeitswerkzeug (6) antreibt.

12. Verfahren (100) zur Steuerung eines handgehaltenen Elektrowerkzeugs (2), das einen Verbrennungsmotor (4), ein Arbeitswerkzeug (6) und eine Fliehkraftkupplung (8) umfasst, wobei die Fliehkraftkupplung (8) den Verbrennungsmotor (4) mit dem Arbeitswerkzeug (6) verbindet, wobei der Verbrennungsmotor (4) eine Einkuppeldrehzahl aufweist, oberhalb der die Fliehkraftkupplung (8) einkuppelt und der Verbrennungsmotor (4) das Arbeitswerkzeug (6) antreibt, wobei das handgehaltene Elektrowerkzeug (2) ferner ein Steuersystem (10) umfasst, das eine elektronische Steuerlogik (24), einen ersten Sensor (26), der mit einem Stoppschalter (30) des Verbrennungsmotors (4) verbunden ist, und einen zweiten Sensor (28) umfasst, der mit einer Drosselklappe (16) des Verbrennungsmotors (4) verbunden und konfiguriert ist, eine Motorstartposition der Drosselklappe (16) zu erfassen, wobei eine erste Leiterbahn (36) den ersten Sensor (26) umfasst und eine zweite Leiterbahn (38) den zweiten Sensor (28) umfasst, wobei die erste Leiterbahn (36) und die zweite Leiterbahn (38) mit einem Eingang (40) der elektronischen Steuerlogik (24) verbunden sind, wobei die erste Leiterbahn (36) und die zweite Leiterbahn (38) mit einem festen Spannungspotenzial des Steuersystems (10) verbunden sind, wobei die erste Leiterbahn (36) eine erste elektrische Eigenschaft und die zweite Leiterbahn (38) eine zweite elektrische Eigenschaft aufweist, sich die erste elektrische Eigenschaft und die zweite elektrische Eigenschaft zusammen von mindestens einer von der ersten elektrischen Eigenschaft und der zweiten elektrischen Eigenschaft unterscheiden, wobei das Steuersystem (10) eine Drehzahlbegrenzungssteuerung (44) umfasst, die konfiguriert ist, eine Drehzahl des Verbrennungsmotors (4) auf eine Begrenzungsdrehzahl zu begrenzen, wobei die Begrenzungsdrehzahl unterhalb der Einkuppeldrehzahl liegt, und wobei das Verfahren (100) die Schritte umfasst:
- Aktivieren (108) der Drehzahlbegrenzungssteuerung (44) vor oder während eines Startvorgangs des Verbrennungsmotors (4),
- Ausgeben (102) einer Gleichspannung, einer gepulsten Gleichspannung oder einer Wechselspannung an dem Ausgang der elektronischen Steuerlogik (24),
- Messen (104) einer Spannung oder eines Stroms an dem Eingang (40) der elektronischen Steuerlogik (24),
- Detektieren (106) eines bestimmten Zustands des zweiten Sensors (28) basierend auf der gemessenen Spannung oder dem gemessenen Strom und
- Freigeben (112) des Geschwindigkeitsbegrenzungsreglers (44), sodass er deaktiviert wird, wenn der bestimmte Zustand bestimmt wurde.

13. Verfahren (100) nach Anspruch 12, wobei der Geschwindigkeitsbegrenzungsregler (44) in einem Startsicherheitsaktivmodus aktiv ist, und wobei der Geschwindigkeitsbegrenzungsregler (44) deaktiviert werden kann, wenn ein Startsicherheitsdeaktivierungskriterium erfüllt ist, wobei das Verfahren (100) die Schritte umfasst:
- Identifizieren (114) des Startsicherheitsaktivmodus basierend auf einem Zustand des zweiten Sensors (28) und
- Identifizieren (116) des Startsicherheitsdeaktivierungskriteriums basierend auf dem bestimmten Zustand des zweiten Sensors (28).

## Revendications

1. Système de commande (4) pour commander un moteur à combustion interne (4) d'un outil mécanique portatif (2), l'outil mécanique portatif (2) comprenant un outil de travail (6), et un embrayage centrifuge (8), l'embrayage centrifuge (8) raccordant le moteur à combustion interne (4) à l'outil de travail (6), dans lequel le moteur à combustion interne (4) a une vitesse de prise d'embrayage au-dessus de laquelle l'embrayage centrifuge (8) entre en prise et le moteur à combustion interne (4) entraîne l'outil de travail (6), dans lequel le système de commande (10) comprend une logique de commande électronique (24), un premier capteur (26) associé à un interrupteur d'arrêt (30) du moteur à combustion interne (4), et un second capteur (28) associé à un papillon des gaz (16) du moteur à combustion interne (4) et configuré pour détecter une position de démarrage de moteur du papillon des gaz (16), dans lequel un premier chemin conducteur (36) comprend le premier capteur (26) et un second chemin conducteur (38) comprend le second capteur (28), et dans lequel le premier chemin conducteur (36) et le second chemin conducteur (38) sont connectés à une entrée (40) de la logique de commande électronique (24), dans lequel le système de commande (10) comprend un régulateur de limitation de vitesse (44) configuré pour limiter une vitesse de rotation du moteur à combustion interne (4) à une vitesse de limitation, laquelle vitesse de limitation est inférieure à la vitesse de prise d'embrayage, dans lequel le régulateur de limitation de vitesse (44) est actif ou activé durant une procédure de démarrage du moteur à combustion interne (4), et dans lequel le régulateur de limitation de vitesse (44) est capable d'être désactivé lorsqu'un état particulier du second capteur (28) est détecté par la logique de commande électronique (24), **caractérisé en ce que** le premier chemin conducteur (36) et le second chemin conducteur (38) sont connectés à un potentiel de tension fixe du système de commande (10), dans lequel le premier chemin conducteur (36) a une première propriété électrique et le second chemin conducteur (38) a une seconde propriété électrique, et dans lequel
la première propriété électrique et la seconde propriété électrique ensemble sont différentes d'au moins une de la première propriété électrique et de la seconde propriété électrique,
de telle sorte que la logique de commande électronique (24) soit capable de détecter différents états d'au moins un du premier capteur (26) et du second capteur (28) à l'entrée (40) de la logique de commande électronique (24).

2. Système de commande (10) selon la revendication 1, dans lequel le premier chemin conducteur (36) et le second chemin conducteur (38) sont connectés en parallèle ou en série à l'entrée (40) de la logique de commande électronique (24).

3. Système de commande (10) selon l'une quelconque des revendications précédentes, dans lequel le premier capteur (26) est configuré pour altérer une première propriété conductrice du premier chemin conducteur (36) et dans lequel le second capteur (28) est configuré pour altérer une seconde propriété conductrice du second chemin conducteur (38).

4. Système de commande (10) selon l'une quelconque des revendications précédentes, dans lequel le premier chemin conducteur (36) comprend seulement le premier capteur (26).

5. Système de commande (10) selon l'une quelconque des revendications précédentes, dans lequel le second chemin conducteur (38) comprend un composant électrique (42) et le second capteur (28).

6. Système de commande (10) selon l'une quelconque des revendications précédentes, dans lequel le premier chemin conducteur (36) et le second chemin conducteur (38) sont connectés à un potentiel de tension fixe du système de commande (10) par l'intermédiaire d'une sortie (46) de la logique de commande électronique (24).

7. Système de commande (10) selon la revendication 5 et 6, dans lequel la logique de commande électronique (24) est configurée pour sortir une tension CC sur la sortie (46) de la logique de commande électronique (24), et dans lequel le composant électrique (42) est une résistance.

8. Système de commande (10) selon la revendication 5 et 6, dans lequel la logique de commande électronique (24) est configurée pour sortir une tension CC pulsée ou une tension CA sur la sortie (46) de la logique de commande électronique (24), et dans lequel le composant électrique (42) est une résistance, ou un inducteur, ou un condensateur.

9. Système de commande (10) selon l'une quelconque des revendications précédentes, dans lequel la logique de commande électronique (24) est configurée pour identifier un mode actif de sécurité de démarrage sur la base d'un état du second capteur (28), le régulateur de limitation de vitesse (44) étant actif dans le mode actif de sécurité de démarrage, et pour identifier un critère de désactivation de sécurité de démarrage, qui est respecté par l'état particulier du second capteur (28), et en réponse auquel la logique de commande électronique (24) permet au régulateur de limitation de vitesse (44) d'être désactivé.

10. Outil mécanique portatif (2) comprenant un moteur à combustion interne (4), un outil de travail (6), et un embrayage centrifuge (8), l'embrayage centrifuge (8) raccordant le moteur à combustion interne (4) à l'outil de travail (6), dans lequel le moteur à combustion interne (4) a une vitesse de prise d'embrayage au-dessus de laquelle l'embrayage centrifuge (8) entre en prise et le moteur à combustion interne (4) entraîne l'outil de travail (6),
**caractérisé en ce que** l'outil mécanique portatif (2) comprend un système de commande (10) selon l'une quelconque des revendications précédentes.

11. Utilisation d'un système de commande (10) selon l'une quelconque des revendications 1 à 9 dans un outil mécanique portatif (2) comprenant un moteur à combustion interne (4), un outil de travail (6), et un embrayage centrifuge (8), l'embrayage centrifuge (8) raccordant le moteur à combustion interne (4) à l'outil de travail (6), dans laquelle le moteur à combustion interne (4) a une vitesse de prise d'embrayage au-dessus de laquelle l'embrayage centrifuge (8) entre en prise et le moteur à combustion interne (4) entraîne l'outil de travail (6).

12. Procédé (100) de commande d'un outil mécanique portatif (2) comprenant un moteur à combustion interne (4), un outil de travail (6), et un embrayage centrifuge (8), l'embrayage centrifuge (8) raccordant le moteur à combustion interne (4) à l'outil de travail (6), dans lequel le moteur à combustion interne (4) a une vitesse de prise d'embrayage au-dessus de laquelle l'embrayage centrifuge (8) entre en prise et le moteur à combustion interne (4) entraîne l'outil de travail (6), dans lequel l'outil mécanique portatif (2) comprend en outre un système de commande (10) comprenant une logique de commande électronique (24), un premier capteur (26) associé à un interrupteur d'arrêt (30) du moteur à combustion interne (4), et un second capteur (28) associé à un papillon des gaz (16) du moteur à combustion interne (4) et configuré pour détecter une position de démarrage de moteur du papillon des gaz (16), dans lequel un premier chemin conducteur (36) comprend le premier capteur (26) et un second chemin conducteur (38) comprend le second capteur (28), dans lequel le premier chemin conducteur (36) et le second chemin conducteur (38) sont connectés à une entrée (40) de la logique de commande électronique (24), dans lequel le premier chemin conducteur (36) et le second chemin conducteur (38) sont connectés à un potentiel de tension fixe du système de commande (10), dans lequel le premier chemin conducteur (36) a une première propriété électrique et le second chemin conducteur (38) a une seconde propriété électrique, la première propriété électrique et la seconde propriété électrique ensemble sont différentes d'au moins une de la première propriété électrique et de la seconde propriété électrique, dans lequel le système de commande (10) comprend un régulateur de limitation de vitesse (44) configuré pour limiter une vitesse de rotation du moteur à combustion interne (4) à une vitesse de limitation, laquelle vitesse de limitation est inférieure à la vitesse de prise d'embrayage, et dans lequel le procédé (100) comprend les étapes de :
- l'activation (108) du régulateur de limitation de vitesse (44) avant ou durant une procédure de démarrage du moteur à combustion interne (4),
- la sortie (102) d'une tension CC, d'une tension CC pulsée, ou d'une tension CA sur la sortie de la logique de commande électronique (24),
- la mesure (104) d'une tension ou d'un courant à l'entrée (40) de la logique de commande électronique (24),
- la détection (106) d'un état particulier du second capteur (28) sur la base de la tension ou du courant mesuré, et
- la capacité (112) au régulateur de limitation de vitesse (44) d'être désactivé lorsque l'état particulier a été déterminé.

13. Procédé (100) selon la revendication 12, dans lequel le régulateur de limitation de vitesse (44) est actif dans un mode actif de sécurité de démarrage, et dans lequel le régulateur de limitation de vitesse (44) est capable d'être désactivé lorsqu'un critère de désactivation de sécurité de démarrage est respecté, dans lequel le procédé (100) comprend les étapes de :
- l'identification (114) du mode actif de sécurité de démarrage sur la base d'un état du second capteur (28), et
- l'identification (116) du critère de désactivation de sécurité de démarrage sur la base de l'état particulier du second capteur (28).
